# EUROPÄISCHE PATENTANMELDUNG

(11) **EP 2 093 513 A2**
(43) Veröffentlichungstag der Anmeldung: **26.08.2009**
(21) Anmeldenummer: 09153134.3
(22) Anmeldetag: 18.02.2009
(51) Int. Cl.: F24H 1/18

(54) **Wärmeisolierende Umkleidung**

(30) Priorität: 22.02.2008 DE 102008010610
(71) Anmelder: Ten Cate Enbi GmbH, 51379 Leverkusen (DE)
(72) Erfinder: Gollan, Jürgen, 51467 Bergisch Gladbach (DE)
(74) Vertreter: Lippert, Stachow & Partner

(57) **Zusammenfassung**

Die Erfindung betrifft eine wärmeisolierende Umkleidung für Körper, insbesondere für Warmwasserspeicher oder dergleichen, mit einer äußeren Manschette aus zugfestem Material sowie einer an deren Innenseite anliegenden wärmeisolierenden Dämmschicht aus viellagigem Faservlies, welche im fertig montierten Zustand an der Außenhaut des zu isolierenden Körpers anliegt. Dabei wird das Material des Faservlieses derart angeordnet, dass die Lagen (8) des Faservlieses im Wesentlichen senkrecht zu der äußeren Manschette (2) sowie zu der Außenhaut des zu isolierenden Körpers angeordnet sind, wodurch die benötigte Stauchhärte erreicht wird.

## Beschreibung

Die Erfindung betrifft eine wärmeisolierende Umkleidung für Körper, insbesondere für Warmwasserspeicher oder dergleichen, mit einer äußeren Manschette aus zugfestem Material sowie einer an deren Innenseite anliegenden wärmeisolierenden Dämmschicht aus viellagigem Faservlies, welche im fertig montierten Zustand an der Außenhaut des zu isolierenden Körpers anliegt.

Bei bekannten wärmeisolierenden Umkleidungen der genannten Art besteht das wärmeisolierende Faservlies aus Polyesterfasern, Mineralfasern oder ähnlichem Material, wobei die einzelnen Lagen des Vlieses durch Vernadelung, thermische Behandlung, Klebung oder dergleichen aneinander haften. Handelsübliche Faservliese gibt es in verschiedenen Stärken, wie beispielsweise 50 mm, 80 mm, 100 mm etc. Die äußeren Manschetten bestehen aus zugfestem, größtenteils auch aus flexiblem Material, wie z.B. Polystyrol, Polyester, Aluminium oder dergleichen. Das weiche Faservlies, welches in Form von Platten oder Rollen vorliegt, wird bei der Montage der herkömmlichen Umkleidungen flach gegen den zu isolierenden Körper gelegt. Anschließend oder auch gleichzeitig wird die Manschette aufgebracht, die das Faservliesmaterial an dem zu isolierenden Körper festhält. Beim Auflegen des Faservliesmaterials gegen den entsprechenden Körper verlaufen die Lagen der Faservliese parallel zur Außenfläche des Körpers, d.h., dass sich das Faservliesmaterial selbst beim Aufbringen einer leichten Kraft von außen auf einen Bruchteil seiner Stärke zusammenpressen lässt. Wenn beispielsweise ein zylindrischer Warmwasserspeicher mit einer solchen isolierenden Umkleidung umgeben ist, so weist die Umkleidung keine Steifigkeit auf und kann in radialer Richtung hin und her bewegt werden. Darüber hinaus besteht der Nachteil, dass sich das Vliesmaterial beim Auflegen auf die zylindrische Oberfläche des Körpers an verschiedenen Stellen in Längsrichtung des Zylinders einfaltet, sodass vertikale Hohlräume entstehen, die aufgrund ihrer Kaminwirkung die thermische Isolierung in diesen Bereichen nicht in ausreichendem Maße gewährleisten.

Um zumindest die Steifigkeit der Umkleidung über die Höhe des zu isolierenden Körpers zu gewährleisten, ist es bereits bekannt (DE 20 2004 006 081), die Dämmschicht aus mehreren voneinander beabstandeten, in Längsrichtung oder in Querrichtung der Manschette verlaufenden Stützeinsätzen aus einem festen Dämmstoff herzustellen und die Zwischenräume mit einem weichen Dämmstoff auszufüllen. Mit einer solchen Methode erreicht man zwar eine relativ steife Umkleidung, jedoch ist die Methode relativ aufwendig, und es müssen auch verschiedene Dämmmaterialien eingesetzt werden, die bei der späteren Entsorgung der Umkleidung wieder getrennt werden müssen.

Der Erfindung liegt daher die Aufgabe zugrunde, eine einfach herstellbare und leicht zu entsorgende Umkleidung zu schaffen, die eine ausreichende Steifigkeit aufweist.

Erfindungsgemäß wird diese Aufgabe dadurch gelöst, dass als Dämmschicht ausschließlich Faservlies verwendet wird und die Lagen des Faservlieses im Wesentlichen senkrecht zu der äußeren Manschette sowie zu der Außenhaut des zu isolierenden Körpers angeordnet sind.

Die erfindungsgemäße wärmeisolierende Umkleidung kommt also ausschließlich mit einem Faservlies aus, welches in Form größerer Platten oder in aufgerollter Form auf dem Markt erhältlich ist, beispielsweise Polyester-Faservlies. Während sich das Polyester-Faservlies senkrecht zu seiner flachen Außenoberfläche mit geringer Kraft auf einen Bruchteil seiner Dicke zusammendrücken lässt, ist es dagegen in Richtung seiner miteinander verbundenen Lagen relativ stabil. Das Faservliesmaterial wird daher so geschnitten, dass die Steifigkeit in Richtung seiner Lagen ausgenutzt wird.

Die Dämmschicht wird daher nicht, wie beim Stand der Technik, dadurch gebildet, dass das plattenförmige Dämmmaterial flach auf den zu isolierenden Körper aufgelegt wird, sondern die Dämmschicht wird durch eine Vielzahl von dicht nebeneinander angeordneten, etwa rechteckigen Blöcken des Vliesstoffs gebildet, wobei die Lagen des Faservlieses senkrecht, zumindest aber im Wesentlichen senkrecht, zu der äußeren Manschette sowie der Außenhaut des zu isolierenden Körpers verlaufen. Bei einer runden Umkleidung, die beispielsweise einen zylindrischen Warmwasserspeicher umgeben soll, verlaufen also die Lagen innerhalb der Faservliesblöcke etwa radial zu dem zu umschließenden Zylinder, wodurch eine für den vorliegenden Anwendungsfall ausreichende Steifigkeit bzw. Stauchhärte der Umkleidung erzielt wird.

Die auf dem zu isolierenden Körper angeordneten Blöcke werden durch die äußere Manschette zusammengehalten und an die Außenhaut des zu isolierenden Körpers angedrückt.

Um die Montage zu erleichtern, können die Blöcke mit der Innenfläche der äußeren Manschette verklebt sein, sodass sie gemeinsam mit der Manschette als eine Einheit an dem zu isolierenden Körper angebracht werden können.

Alternativ können die Blöcke auch untereinander an ihren seitlichen Berührungsflächen miteinander verklebt sein, sodass die Dämmschicht als Einheit behandelt werden kann.

Vorzugsweise sind aber die Blöcke sowohl mit der Innenfläche der äußeren Manschette als auch untereinander an ihren seitlichen Berührungsflächen miteinander verklebt, sodass eine äußerst kompakte Einheit entsteht, die leicht und problemlos als einstückiges Teil gehandhabt werden kann.

Die äußere Manschette besteht vorzugsweise aus flexiblem Material. Um an ihr die Faservliesblöcke zu befestigen, kann die Manschette flach ausgebreitet werden und es werden dann die Faservliesblöcke einzeln oder auch bereits in zusammengeklebter Form an der Manschette befestigt. Die flexible Manschette passt sich dann der äußeren Kontur des zu umkleidenden Körpers an.

Es ist möglich, die Manschette bereits vor dem Aufbringen auf den entsprechenden Körper zu schließen und sie dann über den Körper zu stülpen. Vorzugsweise ist die Manschette jedoch an einer oder gegebenenfalls auch an mehreren Stellen in Längsrichtung über ihre gesamte Höhe geteilt, wobei die Teilungskanten mittels Befestigungselementen miteinander verbindbar sind. Auf diese Weise lässt sich die Umkleidung leichter an dem zu isolierenden Körper anbringen.

Ein bevorzugtes erfindungsgemäßes Verfahren zur Herstellung der wärmeisolierenden Umkleidung besteht darin, dass die Faservliese im Wesentlichen senkrecht zu den Vlieslagen zu Blöcken geschnitten werden und dass die Blöcke derart nebeneinander an der Manschette angeordnet werden, dass die Vlieslagen etwa senkrecht zu der Manschette verlaufen. Zur leichteren Handhabung der Umkleidung können die Blöcke an die Manschette angeklebt werden.

Um das Verfahren weitestgehend zu rationalisieren, kann bei der Herstellung so vorgegangen werden, dass mehrere Platten aus viellagigem Faservlies zu einem Stapel übereinander gelegt werden, dass die Faservliesplatten miteinander verklebt werden und dass der aus den verklebten Faservliesen bestehende Stapel im Wesentlichen senkrecht zu den Vlieslagen in Abschnitte mit den benötigten Maßen zertrennt wird. Wenn folglich eine Manschette verwendet werden soll, die in nur einer Längsfuge geteilt ist, also um den gesamten zu umkleidenden Körper herumreicht, so wird der aus den Faservliesplatten gebildete Stapel so hoch gewählt, dass seine Höhe dem inneren Umfang der Manschette entspricht. Von diesem Stapel wird dann senkrecht zu den Lagen der Faservliese ein Abschnitt abgetrennt, dessen Stärke der Dicke der herzustellenden Dämmschicht entspricht. Dieser abgetrennte Abschnitt entspricht dann in sämtlichen Abmessungen der fertigen Dämmschicht.

Wenn die Manschette beispielsweise aus zwei Teilen besteht, so wird die Höhe des aus den Faservliesen gebildeten Stapels so bemessen, dass sie dem halben Umfang der Gesamtmanschette entspricht.

Die Dicke der von dem Stapel abgetrennten Abschnitte entspricht zweckmäßig der Wandstärke der herzustellenden Dämmschicht. Insofern kann ohne zusätzlichen Aufwand jede beliebige Dämmschichtdicke hergestellt werden, ohne dass größere Abfallstücke anfallen.

Zur leichteren Handhabung kann der jeweilige abgetrennte Abschnitt auf die Manschette bzw. auf die Teilmanschette aufgeklebt werden.

Die Erfindung ist in der Zeichnung beispielhaft veranschaulicht und im Nachstehenden im Einzelnen anhand der Zeichnungen beschrieben.

Es zeigen:
- Fig. 1: eine wärmeisolierende Umkleidung für einen zylindrischen Körper, und zwar als Schnitt entlang der Linie I-I aus Fig. 2,
- Fig. 2: einen Schnitt entlang der Linie II-II aus Fig. 1,
- Fig. 3: den Ausschnitt III aus Fig. 2 in vergrößerter Darstellung,
- Fig. 4: einen Stapel aus übereinandergelegten Faservliesplatten vor dem Zerschneiden und
- Fig. 5: einen Abschnitt von dem Faservliesstapel, der als Dämmschicht auf die äußere Manschette aufgelegt ist.

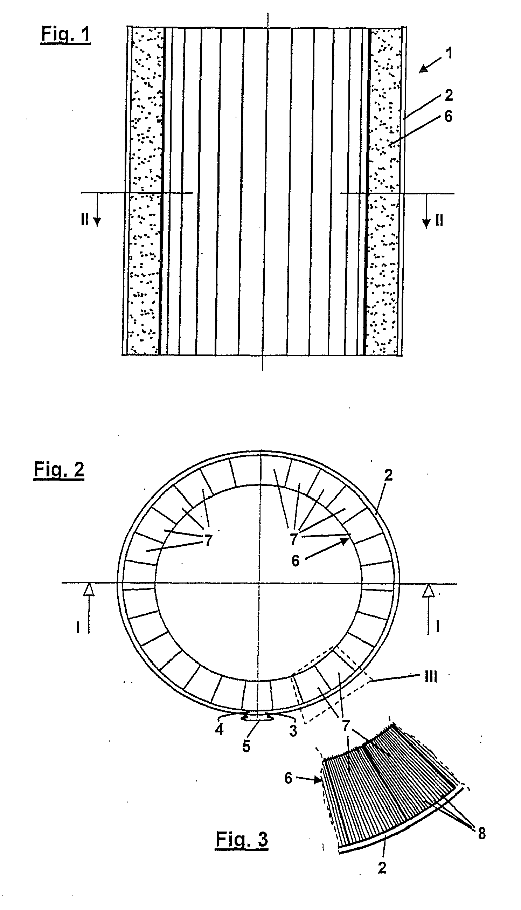

In Fig. 1 bis 3 der Zeichnung ist eine wärmeisolierende Umkleidung 1 für einen zylindrischen Körper, beispielsweise einen Warmwasserspeicher, dargestellt.

Die wärmeisolierende Umkleidung 1 besteht dabei im Wesentlichen aus einer äußeren flexiblen, blechartigen Manschette aus zugfestem Material, wie z.B. Polystyrol, Polyester, Aluminium oder dergleichen. Die seitlichen freien Enden 3 und 4, die bei der Endmontage zusammengefügt werden, können mit Hilfe eines Befestigungselementes 5 bündig miteinander verbunden werden.

An seiner Innenseite weist die Manschette 2 eine Dämmschicht 6 aus wärmeisolierendem viellagigem Faservlies, beispielsweise aus Polyesterfasern, auf. Die Dämmschicht 6 ist aus einer Vielzahl von Blöcken 7 zusammengesetzt, die im status nascendi im Querschnitt im Wesentlichen eine rechteckige Gestalt aufweisen. Wie insbesondere aus Fig. 3 hervorgeht, verlaufen die einzelnen Lagen 8 des Faservlieses im Wesentlichen senkrecht zu der äußeren Manschette 2.

Die einzelnen Blöcke 7 sind sowohl mit den benachbarten Blöcken 7 als auch mit der Manschette 2 verklebt, sodass die gesamte Umkleidung 1 ein leicht zu handhabendes, einstückiges Teil bildet.

Wenn die mit den Blöcken 7 versehene Manschette 2 wie in Fig. 2 dargestellt, zu einem Zylinder zusammengebogen wird, so können sich die einzelnen Blöcke 7 in Umfangsrichtung leicht zusammendrücken, da die übereinanderliegenden Lagen 8 des Vlieses keinen größeren Widerstand entgegensetzen. In radialer Richtung, also in Richtung der Lagen 8, weisen die Blöcke 7 dagegen eine relativ hohe Festigkeit auf, die ausreicht, um die nötige Stabilität nach Ausführung der Montage zu gewährleisten.

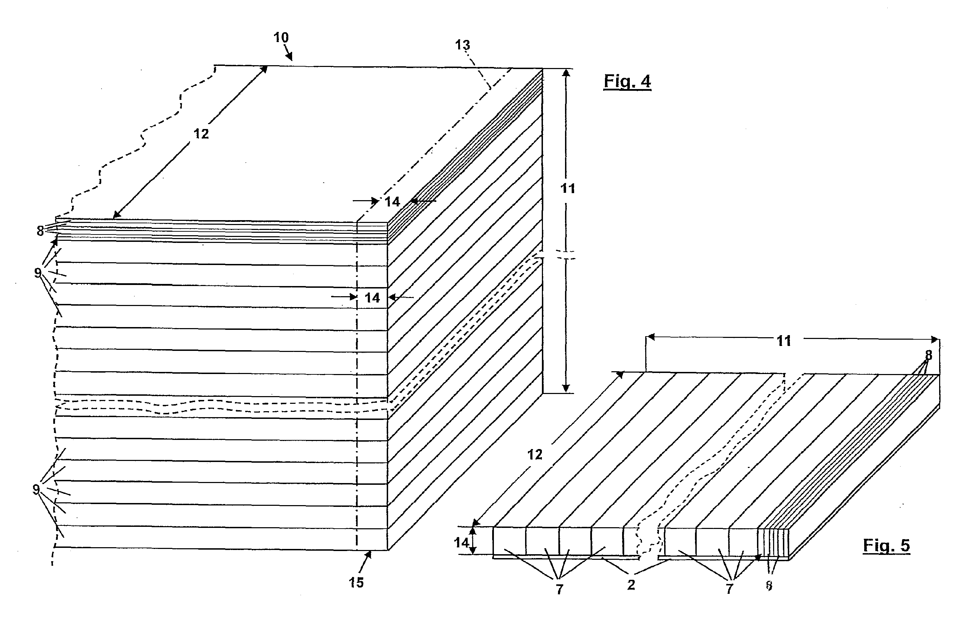

In den Figuren 4 und 5 wird das Herstellungsverfahren für die wärmeisolierende Umkleidung veranschaulicht.

Gemäß Fig. 4 werden einzelne rechteckige Platten 9 aus viellagigem Faservlies zu einem Stapel 10 übereinander gelegt und miteinander verklebt. Die Höhe 11 des Stapels 10 ist dabei so gewählt, dass sie ziemlich genau dem inneren Umfang der Manschette 2 oder einem Bruchteil des Umfangs entspricht. Die Breite 12 des Stapels 10 entspricht der Höhe der Manschette 2.

Zur Herstellung einer mit der Manschette 2 zu verbindenden Dämmschicht 6 wird ein Schnitt entlang der strichpunktierten Linie 13 ausgeführt, wobei die Dicke 14 des abzutrennenden Abschnitts 15 der Dicke der Dämmschicht 6 entspricht.

Wie auch Fig. 5 hervorgeht, wird der abgetrennte Abschnitt 15 auf die Manschette 2 aufgelegt und an dieser festgeklebt. Dabei liegen die einzelnen im Querschnitt rechteckigen Blöcke 7 dicht an dicht in zusammengeklebter Form nebeneinander, wobei sich die einzelnen Lagen 8 des Faservlieses etwa senkrecht von der Manschette 2 weg erstrecken.

Wenn die fertige Umkleidung 1 beispielsweise um einen zylindrischen Körper herumgelegt wird, so kann sich der dem Körper zugewandte Bereich der aus den Faservliesen bestehenden Blöcke 7 leicht zusammendrücken, sodass die Manschette 2 zusammen mit der flexiblen Dämmschicht 6 bequem zu einem Zylinder gebogen werden kann.

Wenn die Umkleidung 1 in ihrer vorgesehenen Position auf dem zylindrischen Körper sitzt, werden die freien Enden 3 und 4 der Manschette 2 mittels eines Befestigungselementes 5 miteinander verbunden.

In der montierten Position sitzt die wärmeisolierende Umkleidung 1 fest auf dem in der Zeichnung nicht dargestellten Körper. Da die Blöcke 7 in Richtung ihrer einzelnen Lagen 8, im vorliegenden Fall also in radialer Richtung, eine relativ hohe Festigkeit und Steifigkeit aufweisen, ist ein sehr guter und stabiler Verbund der Umkleidung 1 mit dem umhüllten Körper möglich.

### Bezugszeichenliste

- 1: wärmeisolierende Umkleidung
- 2: Manschette
- 3: seitliches freies Ende
- 4: seitliches freies Ende
- 5: Befestigungselement
- 6: Dämmschicht
- 7: Blöcke
- 8: Lagen des Faservlieses
- 9: Platten aus Faservlies
- 10: Stapel
- 11: Höhe des Stapels
- 12: Breite des Stapels
- 13: Schnittlinie
- 14: Dicke des abgetrennten Abschnitts
- 15: Abschnitt vom Stapel 10

## Patentansprüche

1. Wärmeisolierende Umkleidung für Körper, insbesondere für Warmwasserspeicher oder dergleichen, mit einer äußeren Manschette aus zugfestem Material sowie einer an deren Innenseite anliegenden wärmeisolierenden Dämmschicht aus viellagigem Faservlies, welche im fertig montierten Zustand an der Außenhaut des zu isolierenden Körpers anliegt, **dadurch gekennzeichnet, dass** die Lagen (8) des Faservlieses im Wesentlichen senkrecht zu der äußeren Manschette (2) sowie zu der Außenhaut des zu isolierenden Körpers angeordnet sind.

2. Wärmeisolierende Umkleidung nach Anspruch 1, **dadurch gekennzeichnet, dass** die Dämmschicht (6) durch eine Vielzahl von dicht nebeneinander angeordneten, etwa rechteckigen Blöcken (7) des Faservlieses gebildet ist.

3. Wärmeisolierende Umkleidung nach Anspruch 2, **dadurch gekennzeichnet, dass** die angeordneten Blöcke (7) durch die äußere Manschette (2) zusammenhaltbar und an die Außenhaut des zu isolierenden Körpers andrückbar sind.

4. Wärmeisolierende Umkleidung nach Anspruch 2 oder 3, **dadurch gekennzeichnet, dass** die Blöcke (7) mit der Innenfläche der äußeren Manschette (2) verklebt sind.

5. Wärmeisolierende Umkleidung nach Anspruch 2 oder 3, **dadurch gekennzeichnet, dass** die Blöcke (7) untereinander an ihren seitlichen Berührungsflächen miteinander verklebt sind.

6. Wärmeisolierende Umkleidung nach Anspruch 4 und 5, **dadurch gekennzeichnet, dass** die Blöcke (7) sowohl mit der Innenfläche der äußeren Manschette (2) als auch untereinander an ihren seitlichen Berührungsflächen miteinander verklebt sind.

7. Wärmeisolierende Umkleidung nach einem der Ansprüche 1 bis 6, **dadurch gekennzeichnet, dass** die äußere Manschette (2) aus flexiblem Material besteht.

8. Wärmeisolierende Umkleidung nach einem der Ansprüche 1 bis 7, **dadurch gekennzeichnet, dass** die äußere Manschette (2) an einer oder gegebenenfalls auch an mehreren Stellen in Längsrichtung über ihre gesamte Höhe geteilt ist und dass die seitlichen freien Enden (3,4) der Manschette (2) mittels Befestigungselementen (5) miteinander verbindbar sind.

9. Verfahren zur Herstellung einer wärmeisolierenden Umkleidung nach einem der Ansprüche 1 bis 8, **dadurch gekennzeichnet, dass** die Faservliese im Wesentlichen senkrecht zu den Vlieslagen (8) zu Blöcken (7) geschnitten werden und dass die Blöcke (7) derart nebeneinander an der Manschette (2) angeordnet werden, dass die Vlieslagen (8) etwa senkrecht zu der Manschette (2) ausgerichtet sind.

10. Verfahren nach Anspruch 9, **dadurch gekennzeichnet, dass** die Blöcke (7) an die Manschette (2) angeklebt werden.

11. Verfahren nach Anspruch 9 oder 10, **dadurch gekennzeichnet, dass** mehrere Platten (9) aus viellagigem Faservlies zu einem Stapel (10) übereinander gelegt werden, dass die übereinandergelegten Platten (9) miteinander verklebt werden und dass der aus den verklebten Faservliesen bestehende Stapel (10) im Wesentlichen senkrecht zu den Vlieslagen (8) in Abschnitte (15) mit den benötigten Maßen zertrennt wird.

12. Verfahren nach Anspruch 11, **dadurch gekennzeichnet, dass** die Höhe (11) des aus den Platten (9) gebildeten Stapels (10) etwa der Länge des Umfangs der Manschette (2) oder einem Bruchteil dieser Länge entspricht.

13. Verfahren nach Anspruch 11 oder 12, **dadurch gekennzeichnet, dass** die Dicke (14) der von dem Stapel (10) abgetrennten Abschnitte (15) der Randstärke der herzustellenden Dämmschicht (6) entspricht.

14. Verfahren nach einem der Ansprüche 11 bis 13, **dadurch gekennzeichnet, dass** die von dem Stapel (10) abgetrennten Abschnitte (15) auf die Manschette (2) aufgeklebt werden.

15. Verfahren zur Montage einer wärmeisolierenden Umkleidung mit flexibler Manschette nach einem der Ansprüche 1 bis 8, **dadurch gekennzeichnet, dass** die Umkleidung (1) um den zu isolierenden Körper derart herumgelegt wird, dass die Lagen der die Dämmschicht (6) bildenden Faservliese im Wesentlichen senkrecht gegen den zu isolierenden Körper anliegen.
